# EUROPÄISCHE PATENTSCHRIFT

(11) **EP 3 829 925 B1**
(45) Veröffentlichungstag und Bekanntmachung des Hinweises auf die Patenterteilung: **27.07.2022**
(21) Anmeldenummer: 19746065.2
(22) Anmeldetag: 24.07.2019
(51) Int. Cl.: A45F 3/18, B60N 3/10, B60R 11/00

(54) **VORRICHTUNG MIT EINEM GETRÄNKEBEHÄLTERHALTER UND EINEM GETRÄNKEBEHÄLTER**
DEVICE WITH A BEVERAGE CONTAINER HOLDER AND A BEVERAGE CONTAINER
DISPOSITIF COMPRENANT UN SUPPORT DE CONTENANT DE BOISSON ET UN CONTENANT DE BOISSON

(30) Priorität: 03.08.2018 DE 202018003627 U; 09.01.2019 DE 102019100399
(43) Veröffentlichungstag der Anmeldung: 09.06.2021
(73) Patentinhaber: Evo GmbH, 85764 Oberschleissheim (DE)
(72) Erfinder: EISENREICH, Reinhold, 85465 Langenpreising (DE)
(74) Vertreter: Söllner, Udo
(86) Internationale Anmeldenummer: PCT/EP2019/069942
(87) Internationale Veröffentlichungsnummer: WO 2020/025421

(56) Entgegenhaltungen:
- WO-A1-96/33903
- DE-A1-102004 045 522
- US-A1- 2011 147 424

## Beschreibung

Die vorliegende Erfindung betrifft eine Vorrichtung mit einem Getränkebehälterhalter und einem Getränkebehälter, wobei der Getränkebehälterhalter eine Haltereinrichtung zur Anordnung des Getränkebehälters an einer Aufnahme aufweist und eine Aufnahmeeinrichtung zur lösbaren Festlegung des Getränkebehälters besitzt und der Getränkebehälter eine Innenausnehmung zur Aufnahme einer Flüssigkeit aufweist und eine form- und flächenkomplementär zur Aufnahmeeinrichtung ausgebildete Anordnungseinrichtung besitzt und an mindestens einer der Aufnahmeeinrichtung und der Anordnungseinrichtung eine Magneteinrichtung zu deren gegenseitiger lösbarer Festlegung vorgesehen ist, nach dem Oberbegriff des Anspruchs 1.

Derartige Vorrichtungen mit einem Getränkebehälterhalter und einem Getränkebehälter sind am Markt schon in verschiedener Ausführung bekannt geworden. Diese Vorrichtungen weisen üblicherweise die Eigenschaft auf, dass sich die Getränkebehälter in der Form von beispielsweise Trinkflaschen zwar leicht aus dem Getränkebehälterhalter entnehmen lassen, sich das Zurückstecken des Behälters in den Halter aber regelmäßig als umständlich herausstellt.

Anhand der US 4,976,385 B1 ist ein Getränkebehälterhalter bekannt geworden, an dem ein Getränkebehälter mittels am Halter vorgesehener Permanentmagnete festgelegt werden kann.

In ähnlicher Weise ist anhand der US 2011/0147424 A1 ein System aus einem Getränkebehälterhalter und einem Getränkebehälter bekannt geworden, bei dem der Getränkebehälter am Halter mittels Permanentmagneten festgelegt werden kann.

Eine solche Vorrichtung kann beispielsweise an einem Fahrrad verwendet werden, bei dem es sich auch um einen Mountainbike handeln kann, welches im unwegsamen Gelände bewegt wird und bei dem der Benutzer des Fahrrads während der Fahrt den Getränkebehälter zum Trinken von Flüssigkeit entnehmen möchte und den Behälter dann auch wieder in den Halter zurück stellen möchte.

Da dies rasch und unkompliziert geschehen muss, damit der Nutzer beide Hände wieder schnell zur Steuerung des Fahrrads verwenden kann, ist einerseits die Möglichkeit der raschen Positionierung des Getränkebehälters an dem Halter erforderlich und es muss auch gewährleistet sein, dass der dann am Halter positionierte Getränkebehälter auch beim Bewegen des Fahrrads im unwegsamen Gelände sicher festgelegt ist und nicht die Gefahr besteht, dass sich der Behälter vom Halter selbsttätig löst.

Bei dem vorstehend beschriebenen System ist am Getränkebehälter außen eine Nut zur Aufnahme eines Permanentmagneten vorgesehen, welcher mit einem Permanentmagneten zur Festlegung des Behälters am Halter zusammenwirken kann, wobei der Halter eine Schiene aufweist, welche form- und flächenkomplementär zur am Getränkebehälter vorgesehenen Nut ausgebildet ist. Dieses bekannte System weist den Nachteil auf, dass sich eine Positionierung des Behälters am Halter schwierig gestaltet. Wenn nämlich der Getränkebehälter mit seiner Längsnut im Winkel zur Schiene des Halters angesetzt wird, ist eine einfache Positionierung des Behälters am Halter nicht möglich und der Behälter muss danach relativ zur Schiene genau ausgerichtet werden.

Ausgehend hiervon liegt der vorliegenden Erfindung die Aufgabe zugrunde, eine Vorrichtung mit einem Getränkebehälterhalter und einem Getränkebehälter zu schaffen, welche die vorstehend genannten Nachteile beseitigt und dafür sorgt, dass der Getränkebehälter einfach am Getränkebehälterhalter positioniert werden kann und der Getränkebehälter auch bei der Benutzung der Vorrichtung auftretenden Stößen oder Kraftimpulsen sicher am Getränkebehälterhalter festgelegt ist.

Die zur Lösung dieser Aufgabe geschaffene Erfindung weist die im Anspruch 1 angegebenen Merkmale auf. Vorteilhafte Ausgestaltungen hiervon sind in den weiteren Ansprüchen beschrieben.

Die Erfindung schafft eine Vorrichtung mit einem Getränkebehälterhalter und einem Getränkebehälter, wobei der Getränkebehälterhalter eine Haltereinrichtung zur Anordnung des Getränkebehälters an einer Aufnahme aufweist und eine Aufnahmeeinrichtung zur lösbaren Festlegung des Getränkebehälters besitzt und der Getränkebehälter eine Innenausnehmung zur Aufnahme einer Flüssigkeit aufweist und eine form- und flächenkomplementär zur Aufnahmeeinrichtung ausgebildete Anordnungseinrichtung besitzt und an mindestens einer der Aufnahmeeinrichtung und der Anordnungseinrichtung eine Magneteinrichtung zu deren gegenseitiger lösbarer Festlegung vorgesehen ist, wobei sich die Anordnungseinrichtung des Getränkebehälters von einer Bodenseite des Getränkebehälters aus in Richtung zur Innenausnehmung erstreckt und mindestens einen der Aufnahmeeinrichtung zugewandten Flächenbereich aufweist, welcher zumindest einem Segment einer Außenfläche eines ellipsoidförmigen Körpers entspricht.

Diese Konfiguration sorgt dafür, dass der Getränkebehälter einfach an dem Getränkebehälterhalter festgelegt werden kann, da die Anordnungseinrichtung mit ihrer Konfiguration, welche eine Ausnehmung aufweist, die der Außenkontur zumindest eines Bereichs eines eingeschriebenen ellipsoidförmigen Körpers entspricht, einfach an der form- und flächenkomplementär ausgebildeten Aufnahmeeinrichtung des Halters festgelegt werden kann und durch diese Ausbildung eine selbsttätig zentrierende und formschlüssige Festlegung des Behälters am Halter erreicht wird, unabhängig davon, ob der Behälter am Halter im Winkel oder seitlich versetzt positioniert wird, wenn der Benutzer den Behälter am Halter zurück stellen möchte.

Die auf diese Weise zumindest einem Abschnitt einer Negativform eines ellipsoidförmigen Körpers entsprechende Ausnehmung am Behälter sorgt dafür, dass der Behälter bei seiner Relativbewegung an dem Halter in Bewegungsrichtung zur Positionierung des Behälters am Halter auch bei einer zunächst winkeligen Ausrichtung eine Veränderung des Winkelversatzes der Längsmittelachse des Behälters relativ zur Längsmittelachse des Halters erfährt, und sich mit fortschreitender Bewegung in Richtung der Positionierung des Behälters am Halter der Winkelversatz verringert, bis letztlich beide Längsmittelachsen übereinstimmen und der Behälter sicher am Halter festgelegt ist.

Es ist dabei nach einer Weiterbildung der Erfindung vorgesehen, dass der Flächenbereich einem Segment einer Außenfläche eines elliptischen Paraboloids entspricht. Diese Konfiguration sorgt für einen in Bewegungsrichtung des Behälters zur Positionierung am Halter raschen Ausgleich eines etwaigen Winkelversatzes und für eine in Richtung der Längsmittelachse des Behälters lange Kontaktfläche der Ausnehmung des Behälters zur Aufnahmeeinrichtung des Halters und damit für in Längsmittelachsrichtung des Behälters lange Zentrierflächen.

Es ist nach einer Weiterbildung der Erfindung ganz allgemein vorgesehen, dass die Anordnungseinrichtung eine Ausnehmung aufweist, welche einer Rotationsfläche entspricht, die durch Rotation des Flächenbereichs um eine Längsmittelachse des Getränkebehälters gebildet ist. Hierdurch wird eine Ausnehmung geschaffen, welche einer Negativform eines ellipsoidförmigen Körpers entspricht und somit erreicht, dass unabhängig davon, in welche Raumrichtung ein Winkelversatz der Längsmittelachse des Getränkebehälters relativ zur Längsmittelachse des Halters beziehungsweise der Aufnahmeeinrichtung des Halters bei der Positionierung des Behälters am Halter besteht, eine sichere Positionierung des Behälters am Halter erreicht wird.

Mittels der mindestens einen an der Aufnahmeeinrichtung und/oder der Anordnungseinrichtung vorgesehenen Magneteinrichtung wird erreicht, dass nach der Positionierung des Behälters am Halter der Behälter am Halter durch die Magnetkraft sicher festgelegt ist und auch bei entsprechenden Kraftimpulsen, die während der Benutzung der erfindungsgemäßen Vorrichtung an der Aufnahme einwirken, ein unbeabsichtigtes sich Lösen des Behälters vom Halter vermieden wird.

Diese Konfiguration sorgt auch dafür, dass beim Erreichen der Endstellung zwischen dem Behälter und dem Halter, also dann, wenn die axiale Relativbewegung des Behälters zum Halter bei der Positionierung des Behälters am Halter zum Stillstand gekommen ist, ein vom Benutzer der erfindungsgemäßen Vorrichtung als "Klacken" akustisch wahrgenommenes Signal emittiert wird, welches vom Benutzer gehört wird und dieser somit weiß, dass der Behälter am Halter sicher festgelegt ist, ohne dass er dies optisch prüfen muss. Es können also zwei Magneteinrichtungen vorgesehen sein oder auch nur eine, die beispielsweise am Halter vorgesehen ist und mit einem Behälter zusammenwirkt, der mindestens einen mit der Magneteinrichtung zusammen wirkenden Werkstoffabschnitt aufweist.

Es ist nach einer Weiterbildung der Erfindung vorgesehen, dass die Anordnungseinrichtung an einem von der Bodenseite beabstandeten Endbereich einen mit einer Abflachung versehenen Bereich aufweist.

An oder in diesem Bereich mit der Abflachung kann beispielsweise ein scheibenförmiger Permanentmagnet angeordnet werden, der mit einem Permanentmagnet am Halter beziehungsweise der Aufnahmeeinrichtung des Halters zur sicheren Festlegung des Behälters am Halter zusammenwirkt.

Es ist nach einer Weiterbildung der Erfindung auch vorgesehen, dass die Aufnahmeeinrichtung beabstandet zur Haltereinrichtung angeordnet ist und ein Aufnahmebereich zwischen der Aufnahmeeinrichtung und der Haltereinrichtung ausgebildet ist, welcher zur Aufnahme eines Abschnitts des Getränkebehälters ausgebildet ist.

Diese Konfiguration sorgt dafür, dass durch den seitlichen Abstand der Aufnahmeeinrichtung zur Haltereinrichtung ein für die Positionierung des Behälters vom Halter von jeder Raumrichtung her ausreichender Spielraum zur Positionierung des Behälters am Halter geschaffen wird, sodass es keinen Unterschied macht, mit welcher Hand oder von welcher Richtung aus der Benutzer den Behälter am Halter positioniert.

Es ist nach einer Weiterbildung der Erfindung auch vorgesehen, dass die Aufnahmeeinrichtung einstückig mit der Haltereinrichtung ausgebildet ist und zwischen der Aufnahmeeinrichtung und der Haltereinrichtung ein Verbindungsabschnitt vorgesehen ist.

Diese einstückige Ausbildung ermöglicht es, den Getränkebehälterhalter beispielsweise aus einem Kunststoffwerkstoff einstückig und kostengünstig herzustellen, sodass der Getränkebehälter nach dem Ausformen des Halters aus der Werkzeugform ohne weitere Bearbeitungsschritte an der Aufnahmeeinrichtung fertiggestellt ist.

Es ist nach einer Weiterbildung der Erfindung auch vorgesehen, dass die Aufnahmeeinrichtung mindestens einen form- und flächenkomplementär zum Flächenbereich ausgebildeten ersten Halteabschnitt aufweist, der zur formschlüssigen Aufnahme eines Abschnitts des Flächenbereichs des Getränkebehälters ausgebildet ist.

Diese Konfiguration sorgt dafür, dass mittels nur eines beispielsweise streifenförmiger ersten Halteabschnitts, welcher einem streifenförmiger Ausschnitt der Außenfläche eines ellipsoidförmigen Körpers entspricht, eine Formschlussfläche zur Positionierung und Ausrichtung des Behälters am Halteabschnitt bereitgestellt wird, ohne dass die Aufnahmeeinrichtung eine Außenfläche aufweisen muss, welche einer vollständig umlaufenden Außenfläche eines ellipsoidförmigen Körpers, beispielsweise von dessen Endbereich bis zur beispielsweise Hälfte der Längserstreckung des ellipsoidförmigen Körpers, entsprechen muss.

Ähnlich der am Behälter beziehungsweise der Ausnehmung des Behälters vorgesehenen Abflachung ist es nach einer Weiterbildung der Erfindung auch vorgesehen, dass die Aufnahmeeinrichtung einen mit einer Abflachung versehenen Endbereich aufweist, welcher vom Verbindungsabschnitt beabstandet vorgesehen ist. An diesem Endbereich kann beispielsweise ein Permanentmagnet angeordnet werden, welcher mit einem Permanentmagnet im Bereich der Abflachung der Anordnungseinrichtung des Getränkebehälters zur lösbaren Festlegung der beiden Teile aneinander zusammenwirkt.

Es ist nach einer Weiterbildung der Erfindung auch vorgesehen, dass die Aufnahmeeinrichtung mindestens einen form- und flächenkomplementär zum Flächenbereich ausgebildeten zweiten Halteabschnitt aufweist, der zur formschlüssigen Aufnahme eines Abschnitts des Flächenbereichs des Getränkebehälters ausgebildet ist und zwischen dem ersten Halteabschnitt und dem zweiten Halteabschnitt der mit der Abflachung versehene Endbereich angeordnet ist.

Auf diese Weise wird es erreicht, dass zwischen der Abflachung und der Halteeinrichtung, mit der der Getränkebehälterhalter beispielsweise an einer Aufnahme in der Form eines Fahrradrahmens oder eines Armaturenbretts eines Fahrzeugs angeordnet werden kann, mindestens ein speichenförmiger oder streifenförmiger Halteabschnitt vorgesehen sein kann, der zur zentrierenden Anordnung des Behälters an der Halteeinrichtung dient und auch mindestens ein zweiter speichenförmiger oder streifenförmiger Halteabschnitt vorgesehen ist, der von der Abflachung ausgeht und dem mindestens einen ersten Halteabschnitt bezüglich der Abflachung gegenüberliegend angeordnet ist und ebenfalls der zentrierenden Anordnung des Behälters dient.

Die jeweiligen Halteabschnitte dienen daher der selbsttätig zentrierenden Anordnung und Ausrichtung des Behälters an der Halteeinrichtung, ohne dass der Benutzer der erfindungsgemäßen Vorrichtung bei der Anordnung des Behälters an der Halteeinrichtung visuell die richtige Orientierung des Behälters zur Halteeinrichtung überprüfen muss, wie dies bei dem eingangs erwähnten, bekannten System der Fall ist.

Es ist nach einer Weiterbildung der Erfindung auch vorgesehen, dass die Vorrichtung an der Anordnungseinrichtung und/oder der Aufnahmeeinrichtung eine Anlaufschräge aufweist, die derart konfiguriert ist, dass eine Drehung des Getränkebehälters relativ zur Aufnahmeeinrichtung des Getränkebehälterhalters einen lichten Abstand zwischen der Magneteinrichtung am Getränkebehälterhalter und dem Getränkebehälter vergrößert.

Hierzu kann die Anlaufschräge in der Form eines an der Aufnahmeeinrichtung angeordneten, im Schnitt dreieckförmigen oder wellenförmigen Profils ausgebildet sein, welches zum formschlüssigen Eingriff mit im Bereich des Bodens des Getränkebehälters ausgebildeten wellenförmigen Profils vorgesehen ist.

Diese Konfiguration sorgt dafür, dass der Benutzer, wenn er den Getränkebehälter von der Halteeinrichtung abnehmen möchte, mittels einer Drehung des Getränkebehälters relativ zur Halteeinrichtung den lichten Abstand des Behälters zur Halteeinrichtung vergrößert und somit die Magnetkraft zwischen dem Behälter und der Halteeinrichtung verringert wird und der Benutzer dann ohne großen Kraftaufwand den Behälter von der Halteeinrichtung trennen kann und es somit nicht zu einem plötzlichen und unerwarteten Lösen des Behälters von der Halteeinrichtung kommt.

Diese Konfiguration ist beispielsweise dann von Vorteil, wenn die erfindungsgemäße Vorrichtung als Becherhalter konfiguriert am Armaturenbrett eines Fahrzeugs zum Einsatz kommt und es auf diese Weise verhindert wird, dass ein Lösen des Behälters in der Form eines Bechers von der Halteeinrichtung zu einem unbeabsichtigten Verschütten von Flüssigkeit aus dem Becherinnenraum kommt.

Die Erfindung wird im Folgenden anhand der Zeichnung näher erläutert. Diese zeigt in:
Fig. 1 eine Schnittdarstellung einer Ausführungsform einer erfindungsgemäßen Vorrichtung mit einem abschnittsweise dargestellten Unterzugrohr eines Mountainbikes;
Fig. 2 eine perspektivische Darstellung des Getränkebehälterhalters der in Fig. 1 dargestellten Ausführungsform;
Fig. 3 eine geschnittene perspektivische Darstellung des Getränkebehälters nach der Fig. 1;
Fig.4 eine perspektivische Darstellung eines Getränkebehälterhalters einer Vorrichtung einer zweiten Ausführungsform gemäß der vorliegenden Erfindung;
Fig. 5 eine teilweise geschnittene perspektivische Darstellung der zweiten Ausführungsform mit einem am Getränkebehälterhalter angeordneten Getränkebehälter;
Fig. 6 eine Darstellung der zweiten Ausführungsform, wie sie an einem Armaturenbrett eines nicht näher dargestellten Kraftfahrzeugs angeordnet ist.
Fig. 7 eine schematische Ausschnittsdarstellung eines an der Aufnahmeeinrichtung angeordneten Getränkebehälters in der Stellung mit formschlüssigen Eingriff zwischen beiden Bauteilen;
Fig. 8 eine Darstellung ähnlich derjenigen nach Fig. 7, die zeigt, wie sich der Getränkebehälter bei einer Drehung relativ zur Aufnahmeeinrichtung von dieser trennt;
Fig. 9 eine schematische Ausschnittsdarstellung ähnlich derjenigen nach Fig. 7, die zeigt, wie sich der Getränkebehälter bei einer Drehung relativ zur Aufnahmeeinrichtung bei einer zweiten Ausführungsform der Anlaufschräge trennt; und
Fig. 10 eine schematische Ausschnittsdarstellung ähnlich derjenigen nach Fig. 7, die zeigt, wie sich der Getränkebehälter bei einer Drehung relativ zur Aufnahmeeinrichtung bei einer dritten Ausführungsform der Anlaufschräge trennt.

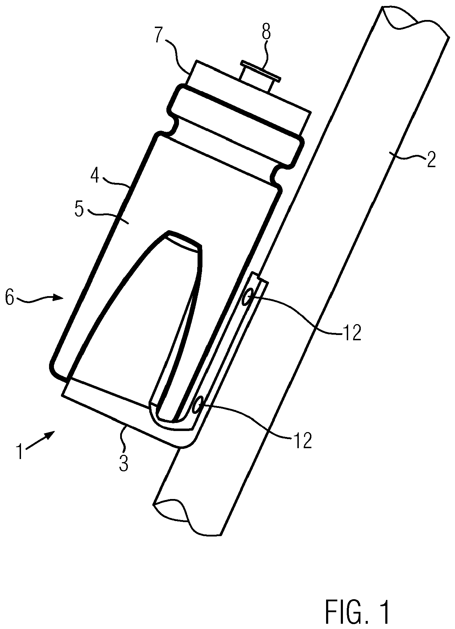

Fig. 1 der Zeichnung zeigt eine Schnittdarstellung einer ersten Ausführungsform einer Vorrichtung 1 nach der vorliegenden Erfindung, angeordnet an einem Unterzugrohr 2 eines nicht näher dargestellten Mountainbikes.

Die Vorrichtung 1 weist einen Getränkebehälterhalter 3 und einen Getränkebehälter 4 in der Form einer Trinkflasche auf.

Die Trinkflasche 4 besitzt eine Innenausnehmung 5 zur Aufnahme von Flüssigkeit, beispielsweise Wasser, welche den vollständigen Innenraum 6 der Trinkflasche 4 ausfüllt. An der Oberseite der Trinkflasche 4 ist ein Deckel 7 in der Form eines Schraubverschlusses vorgesehen, an dem ein Trinkstutzen 8 angeordnet ist, der zur Entnahme von Flüssigkeit aus der Trinkflasche 4 geöffnet und danach wieder verschlossen werden kann.

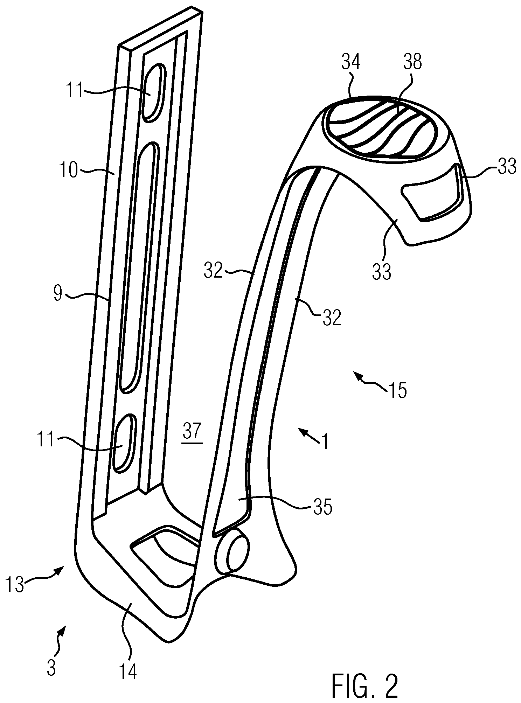

Der in Fig. 2 der Zeichnung näher dargestellte Getränkebehälterhalter 3 besitzt eine Haltereinrichtung 9 in der Form eines lang gestreckten Haltebügels 10, der zwei Öffnungen 11 aufweist, die von zwei Schraubbolzen 12 durchsetzt werden können, mit denen der Getränkebehälterhalter 3 an dem Unterzugrohr 2 lösbar festgelegt werden kann.

Wie es anhand von Fig. 2 der Zeichnung näher ersichtlich ist, erstreckt sich von einem in der Zeichnungsebene unteren Bereich 13 des Getränkebehälterhalters 3 in einem weitgehend rechten Winkel ein Verbindungsabschnitt 14 einstückig vom Haltebügel 10 weg, an dem eine Aufnahmeeinrichtung 15 einstückig mit dem Verbindungsabschnitt 14 angeordnet ist, die zur lösbaren Festlegung des Getränkebehälters 4 dient.

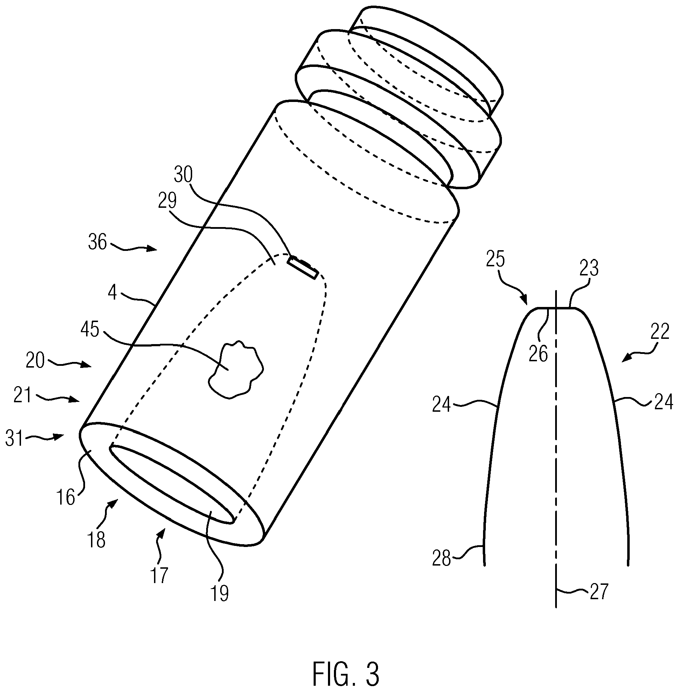

Fig. 3 der Zeichnung zeigt eine Schnittdarstellung des Getränkebehälters 4, wie er in Fig. 1 der Zeichnung dargestellt ist, in einer vom Getränkebehälterhalter 3 gelösten Stellung.

Wie es ohne weiteres ersichtlich ist, erstreckt sich von einer Bodenseite 16 des Getränkebehälters 4 eine Anordnungseinrichtung 17 in Richtung zur Innenausnehmung 5 des Getränkebehälters 4.

Die Anordnungseinrichtung 17 bildet eine Ausnehmung 18, die sich in die Innenausnehmung 5 der Trinkflasche 4 erstreckt und deren Innenfläche 19 einer Außenfläche eines in den Bodenbereich 20 des Getränkebehälters 4 eingeschriebenen ellipsoidförmigen Körpers entspricht. Der ellipsoidförmige Körper ist der Erläuterung halber als bei der gewählten Ausführungsform elliptisches Paraboloid 22 mit einer Abflachung 23 an der in der Zeichnungsebene Oberseite als Schnittdarstellung in Fig. 3 der Zeichnung ebenfalls dargestellt. In dem Freiraum der Ausnehmung 18 kann beispielsweise ein nicht daher dargestellter Fahrradschlauch oder eine Druckluftpatrone zum Auffüllen eines Fahrradschlauchs oder dergleichen aufgenommen werden.

Das elliptische Paraboloid 22 weist in der Schnittdarstellung parabelsegmentförmige Schenkel 24 auf, welche an der Oberseite 25 mit einer Strecke 26 verbunden sind und somit eine Schnittkurve 28 bilden, so dass sich das elliptische Paraboloid 22 als Rotationskörper durch Rotation der Schnittkurve 28 um die Längsmittelachse 27 ergibt.

Wird nach einem Gedankenmodell das sich daraus ergebende elliptische Paraboloid 22 als dreidimensionaler Körper in den Bodenbereich 20 des Getränkebehälters 4 eingebracht oder eingeschrieben - beispielsweise als Negativform - und der Getränkebehälter 4 mit seiner Innenausnehmung 5 um dieses elliptische Paraboloid 22 als Formkörper herum beispielsweise mittels eines Extrusionsvorgangs ausgeformt, so stellt sich in dem Getränkebehälter 4 eine Ausnehmung 18 ein, die eine Innenfläche aufweist, welche einer Außenfläche eines in den Bodenbereich 20 eingeschriebenen ellipsoidförmigen Körpers 21 in der Form eines elliptischen Paraboloids 22 entspricht. Damit weist die Anordnungseinrichtung 15 des Getränkebehälters 4 mindestens einen in der Fig. 3 als dort skizzierter Abschnitt dargestellten Flächenbereich 45 auf, der einem Segment einer Außenfläche eines in den Bodenbereich 20 eingeschriebenen ellipisoidförmigen Körpers 21 entspricht.

In den durch die Abflachung 23 ausgebildeten Abflachungsbereich 29 kann eine als scheibenförmiger Körper ausgebildete Magneteinrichtung 30 eingesetzt werden.

Die so ausgebildete Anordnungseinrichtung 17 des Getränkebehälters 4 weist also mit der Innenfläche 19 Flächenbereiche 31 auf, die der Aufnahmeeinrichtung 15 des Getränkebehälterhalters 3 zugewandt sind und einer Außenfläche eines ellipsoidförmigen Körpers 21 entsprechen.

Die Aufnahmeeinrichtung 15 des Getränkebehälterhalters 3 wird nachfolgend näher anhand von Fig. 2 der Zeichnung beschrieben werden.

Bei der in Fig. 2 der Zeichnung dargestellten Ausführungsform des Getränkebehälterhalters 3 besitzt die Aufnahmeeinrichtung 15 zur lösbaren Festlegung des Getränkebehälters 4 zwei einstückig mit dem Verbindungsabschnitt 14 ausgebildete erste Halteabschnitte 32 sowie zwei zweite Halteabschnitte 33, welche von einem Bereich mit einer Abflachung 34 ausgehen, bis zu dem sich die beiden ersten Halteabschnitte 32 vom Verbindungsabschnitt 14 ausgehend erstrecken und die zweiten Halteabschnitte 33 ebenfalls einstückig mit der Abflachung 34 ausgebildet sind.

Wie es ohne weiteres anhand der Fig. 2 der Zeichnung ersichtlich ist, weisen die beiden ersten Halteabschnitte 32 eine streifenförmige Konfiguration auf und besitzen eine zur Innenfläche 19 des Getränkebehälters 4 form- und flächenkomplementäre Ausgestaltung. Zwischen den beiden ersten Halteabschnitten 32 ist eine Freistellung 35 ausgebildet, welche zusammen mit den beiden ersten Halteabschnitten 32 eine Fläche ausbildet, die - wenn die Freistellung 35 als körperliche Fläche die beiden Halteabschnitte 32 verbinden würde - ein streifenförmiges Segment aus der Außenfläche eines elliptischen Paraboloids 22 ausbilden würde.

Da sich die Getränkeflasche 4 bei ihrer Anordnung an der Aufnahmeeinrichtung 15 mit der Innenfläche 19 an den beiden streifenförmigen Halteabschnitten 32 sowie den Halteabschnitten 33 abstützt, kommt es zu einer formschlüssigen selbsttätigen Zentrierung der Getränkeflasche 4 an der Aufnahmeeinrichtung 15, unabhängig davon, in welchem Ausgangswinkel der Benutzer der erfindungsgemäßen Vorrichtung die Getränkeflasche 4 an der Aufnahmeeinrichtung 15 zunächst aufsetzt.

Eine axiale Bewegung der Getränkeflasche 4 in Richtung zu dem Verbindungsabschnitt 14 führt dazu, dass die Außenhülle 36 des Getränkebehälters 4 im Aufnahmebereich 37, der zwischen dem Haltebügel 10 und den beiden Halteabschnitten 32 gebildet wird, aufgenommen wird und dabei eine selbsttätige Zentrierung des Getränkebehälters 4 relativ zur Aufnahmeeinrichtung 15 stattfindet.

An der Abflachung 34 der Aufnahmeeinrichtung 15 ist ein Permanentmagnet 38 vorgesehen, der mit dem Permanentmagnet 30 des Getränkebehälters 4 zusammenwirkt und zwar so, dass der Getränkebehälter 4 an der Aufnahmeeinrichtung 15 sicher gehalten wird und sich nicht selbsttätig davon lösen kann.

Über eine Ausbildung der Vorrichtung 1 derart, dass die einander zugeordneten Kontaktflächen zwischen dem Permanentmagnet 30 und dem Permanentmagnet 38 direkt aufeinander zur Anlage kommen, wenn der Getränkebehälter 4 an dem Getränkebehälterhalter 3 angeordnet wird, kommt es zu einem akustisch als ein "Klacken" wahrnehmbaren Geräusch, wenn die beiden Permanentmagnete aufeinander aufliegen und somit erfährt der Benutzer der erfindungsgemäßen Vorrichtung 1 darüber hinaus eine akustische Rückkopplung, dass der Getränkebehälter 4 sicher an dem Getränkebehälterhalter 3 festgelegt ist, ohne dass der Benutzer dies optisch kontrollieren muss. Dieses Geräusch führt also zu einer vom Benutzer der Vorrichtung 1 einfach festzustellenden Bestätigung der sicheren Halterung.

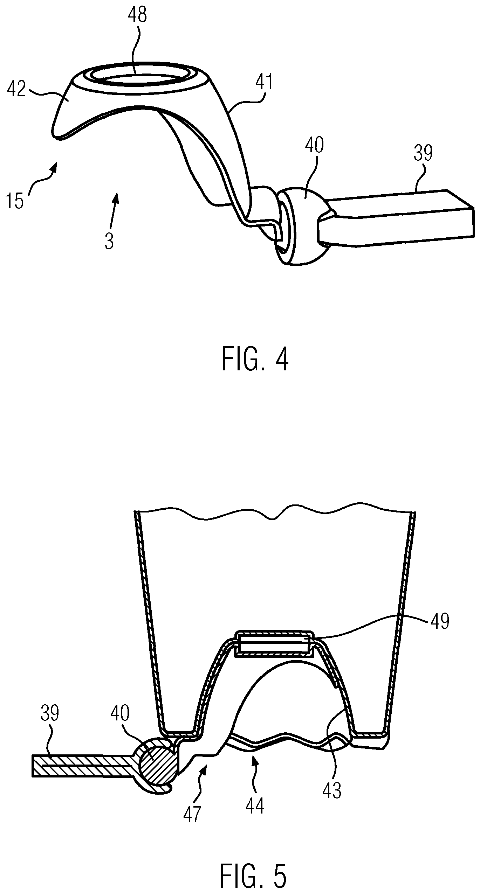

Fig. 4 der Zeichnung zeigt einen Getränkebehälterhalter 3 nach einer modifizierten Ausführungsform, welcher zur Anordnung der Vorrichtung 1 beispielsweise an einem Armaturenbrett eines nicht näher dargestellten Kraftfahrzeugs vorgesehen ist.

Über die lediglich schematisch dargestellte Halteeinrichtung 39 kann der Getränkebehälterhalter 3 am Armaturenbrett festgelegt werden und über ein zwischen der Aufnahmeeinrichtung 15 und der Halteeinrichtung 39 vorgesehenes Kugelgelenk 40 kann die Winkelorientierung zwischen der Aufnahmeeinrichtung 15 und der Halteeinrichtung 39 eingestellt werden, um beispielsweise der Anordnungsstelle am nicht näher dargestellten Armaturenbrett beziehungsweise deren Orientierung relativ zur Vertikalen Rechnung zu tragen.

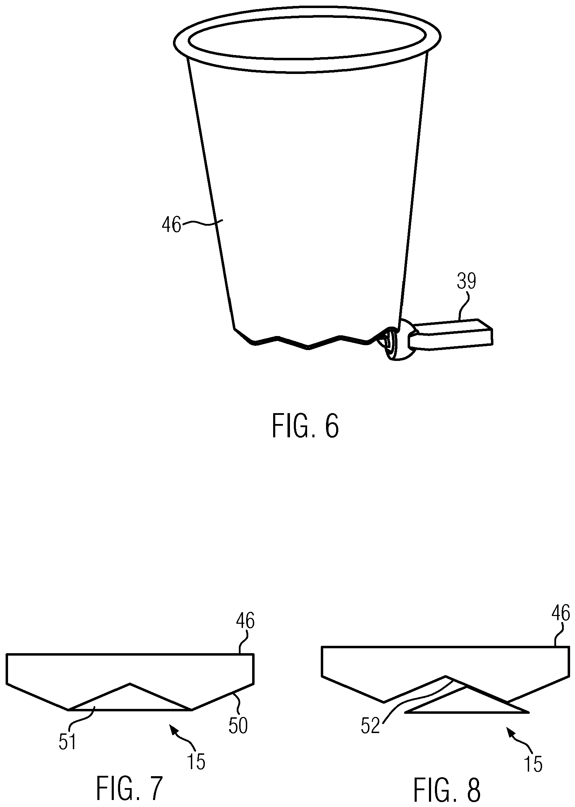

Im Unterschied zu der Ausführungsform der erfindungsgemäßen Vorrichtung mit einem Getränkebehälter in der Form einer Trinkflasche 4 ist bei der in Fig. 4 dargestellten Ausführungsform des Getränkebehälterhalters 3 die Aufnahmeeinrichtung 15 in der Form von Flächenelementen 41, 42 ausgebildet, welche wiederum form- und flächenkomplementär zu einer näher anhand von Fig. 5 der Zeichnung ersichtlichen Innenfläche 43 einer Ausnehmung 44 an dem näher anhand von Fig. 6 der Zeichnung ersichtlichen Getränkebecher 46 vorgesehen ist.

Die Wirkung der Aufnahmeeinrichtung 15 sowie der Ausnehmung 44 entspricht der vorstehend erläuterten Beschreibung, es findet also auch hier eine selbsttätige Zentrierung zwischen dem Getränkebecher 46 beziehungsweise dessen Anordnungseinrichtung 47 und der Aufnahmeeinrichtung 15 statt. Am oberen Endbereich der Aufnahmeeinrichtung 15 ist, wie dies in Fig. 4 der Zeichnung ersichtlich ist, eine Ausnehmung 48 ausgebildet, in der ein nicht näher dargestellter Permanentmagnet angeordnet werden kann und auch der Getränkebecher 46 weist im oberen Endbereich der Ausnehmung 44 eine Ausnehmung 49 auf, in der ein ebenfalls nicht näher dargestellter Permanentmagnet angeordnet werden kann, sodass der Getränkebecher 46 an der Aufnahmeeinrichtung 15 sicher festgelegt wird.

Fig. 7 der Zeichnung zeigt eine schematische Ausschnittsdarstellung eines an der Aufnahmeeinrichtung 15 angeordneten Getränkebehälters in Form des Getränkebehälters 46 in der Stellung mit formschlüssigen Eingriff zwischen beiden Bauteilen.

Wie es ohne weiteres ersichtlich ist, weist der Getränkebecher 46 an seiner Unterseite ein wellenförmiges oder dreieckförmiges Profil 50 auf, welches form- und flächenkomplementär zu einem an der Aufnahmeeinrichtung 15 ausgebildeten dreieckförmigen Profil 51 ausgebildet ist. Diese Konfiguration sorgt dafür, dass die beiden Profile 50, 51 bei einer Anordnung des Getränkebecher 46 an der Anordnungseinrichtung 15 formschlüssig aneinander zur Anlage kommen beziehungsweise einen formschlüssigen Eingriff einnehmen und diesen Eingriff durch die Wirkung der Magneteinrichtung beibehalten.

Möchte der Benutzer den Getränkebecher 46 von der Aufnahmeeinrichtung 15 trennen, so muss er hierzu nur eine Drehung des Getränkebecher 46 relativ zur Aufnahmeeinrichtung 15 durchführen, was dazu führt, dass sich der Getränkebecher 46 aufgrund der von den beiden Profilen 50, 51 ausgebildeten Anlaufschrägen 52 von der Anordnungseinrichtung 15 trennt, d. h. der lichte Abstand zwischen dem Getränkebecher 46 und der Aufnahmeeinrichtung 15 nimmt zu und der Benutzer kann den Getränkebecher 46 einfach von der Anordnungseinrichtung abnehmen, ohne dass die Gefahr besteht, dass im Getränkebecher 46 vorhandene Flüssigkeit verschüttet wird.

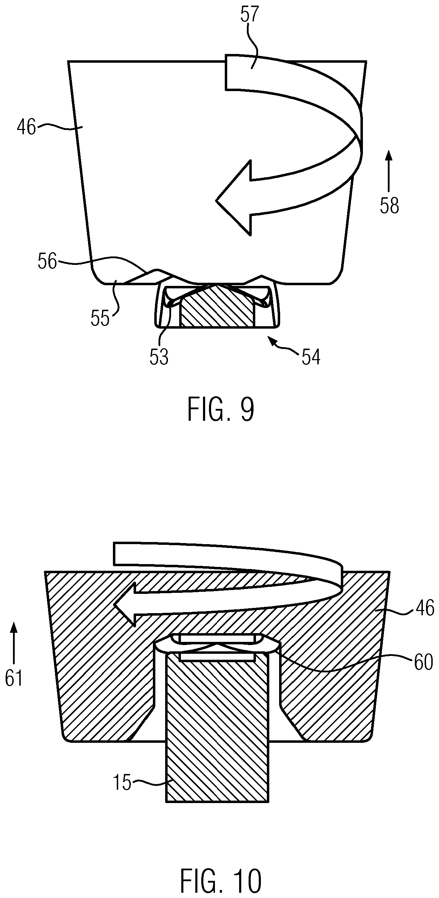

Eine ähnliche Wirkung hat auch die in Fig. 9 der Zeichnung dargestellte Konfiguration, die eine schematische Ausschnittsdarstellung ähnlich derjenigen nach Fig. 7 zeigt, und verdeutlicht, wie sich der Getränkebehälter bei einer Drehung relativ zur Aufnahmeeinrichtung bei einer zweiten Ausführungsform der Anlaufschräge trennt.

Bei der in Fig. 9 der Zeichnung dargestellten Konfiguration weist die Aufnahmeeinrichtung 15 ein an der Oberseite 53 ausgebildetes wellenförmiges Profil 54 auf mit Anlaufschrägen 55 in einem Winkel im Bereich von 15° bis 45°, sodass das am Getränkebecher 46 an der Unterseite oder Bodenseite 55 ausgebildete wellenförmige Profil 56 mit dem mit den Anlaufschrägen 55 versehenen Profil 54 bei einer bestimmungsgemäßen Positionierung des Getränkebechers 46 an der Aufnahmeeinrichtung 15 formschlüssig zum Eingriff kommt.

Möchte der Benutzer den Getränkebecher 46 von der Aufnahmeeinrichtung 15 nach Fig. 9 der Zeichnung abnehmen, so führt eine durch den Pfeil 57 schematisch dargestellte Drehung des Getränkebecher 46 relativ zur Aufnahmeeinrichtung 15 dazu, dass sich der Getränkebecher 46 in die durch den durch den Pfeil 58 dargestellte Richtung von der Aufnahmeeinrichtung trennt und der Benutzer den Getränkebecher 46 einfach abnehmen kann.

Eine ähnliche Wirkung wird auch mit der in Fig. 10 der Zeichnung dargestellten Ausführungsform erreicht, die eine schematische Ausschnittsdarstellung ähnlich derjenigen nach Fig. 7 darstellt, die zeigt, wie sich der Getränkebehälter bei einer Drehung relativ zur Aufnahmeeinrichtung nach der dritten Ausführungsform der Anlaufschräge trennt.

Die Aufnahmeeinrichtung 15 nach der in Fig. 10 der Zeichnung dargestellten dritten Ausführungsform besitzt an der Oberseite 59 eine weitgehend ebene Konfiguration in der Form einer flachen Kontaktfläche, an der ein im Bereich der Ausnehmung des Bechers 46 ausgebildetes im Schnitt dreieckförmiges oder wellenförmiges Profil 60 zur formschlüssigen Anlage kommt, wenn der Becher an der Aufnahmeeinrichtung 15 bestimmungsgemäß positioniert wird. Möchte der Benutzer den Becher 46 von der Aufnahmeeinrichtung 15 trennen, so führt wiederum eine Drehung des Bechers um einen kleinen Winkelbereich relativ zur Aufnahmeeinrichtung 15 dazu, dass sich der welcher 46 in Richtung des Pfeils 61 von der Aufnahmeeinrichtung trennt, der lichte Abstand also zwischen der Aufnahmeeinrichtung 15 und dem Getränkebecher 46 zunimmt und damit die Wirkung der an den beiden Bauteilen vorgesehenen Magneteinrichtung abnimmt und der Benutzer den Becher einfach von der Aufnahmeeinrichtung 15 trennen kann, ohne dass die Gefahr eines Verschüttens von Flüssigkeit aus dem Getränkebecher 46 besteht.

Diese Ausführungsform ist beispielsweise dazu geeignet, dass die Aufnahmeeinrichtung 15 im Bereich einer Mittelkonsole eines nicht näher dargestellten Fahrzeugs positioniert wird und in der Mittelkonsole versenkt werden kann, wenn sie nicht benötigt wird und mittels einer Push-Push Betätigung aus der Mittelkonsole ausgefahren werden kann, damit der Getränkebecher 46 an der Aufnahmeeinrichtung positioniert werden kann.

Die Erfindung zeichnet sich dadurch aus, dass durch die erfindungsgemäße Ausbildung des Getränkebehälterhalters und des Getränkebehälters eine selbsttätig zentrierende Konfiguration geschaffen wurde und der Getränkebehälter am Halter mittels der Permanentmagnete sicher festgelegt ist und dies auch dann, wenn die Vorrichtung an einem Fahrzeug zum Einsatz kommt, welches beispielsweise im unwegsamen Gelände genutzt wird, also beispielsweise einem Mountainbike oder einen anderen geländegängigen Fahrzeug in der Form eines SUV.

Der Getränkebehälter kann beispielsweise mittels eines Extrusionsblasvorgangs ausgebildet werden und bei dessen Herstellung kann die ellipsoide Einbuchtung mit ausgeformt werden.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

- 1.: Vorrichtung
- 2.: Unterzugrohr, Aufnahme
- 3.: Getränkebehälterhalter
- 4.: Getränkebehälter, Trinkflasche
- 5.: Innenausnehmung
- 6.: Innenraum
- 7.: Deckel
- 8.: Trinkstutzen
- 9.: Haltereinrichtung
- 10.: Haltebügel
- 11.: Öffnung
- 12.: Schraubbolzen
- 13.: Bereich
- 14.: Verbindungsabschnitt
- 15.: Aufnahmeeinrichtung
- 16.: Bodenseite
- 17.: Anordnungseinrichtung
- 18.: Ausnehmung
- 19.: Innenfläche
- 20.: Bodenbereich
- 21.: ellipsoidförmiger Körper
- 22.: elliptisches Paraboloid
- 23.: Abflachung
- 24.: Schenkel
- 25.: Oberseite
- 26.: Strecke
- 27.: Längsmittelachse
- 28.: Schnittkurve
- 29.: Abflachungsbereich
- 30.: Magneteinrichtung
- 31.: Flächenbereich
- 32.: erster Halteabschnitt
- 33.: zweiter Halteabschnitt
- 34.: Abflachung
- 35.: Freistellung
- 36.: Außenhülle
- 37.: Aufnahmebereich
- 38.: Permanentmagnet
- 39.: Halteeinrichtung
- 40.: Kugelgelenk
- 41.: Flächenelement
- 42.: Flächenelement
- 43.: Innenfläche
- 44.: Ausnehmung
- 45.: Flächenbereich
- 46.: Getränkebecher
- 47.: Anordnungseinrichtung
- 48.: Ausnehmung
- 49.: Ausnehmung
- 50.: Profil
- 51.: Profil
- 52.: Anlaufschräge
- 53.: Oberseite
- 54.: Profil
- 55.: Bodenseite
- 56.: Profil
- 57.: Profil
- 58.: Pfeil
- 59.: Oberseite
- 60.: Profil
- 61.: Becher

## Patentansprüche

1. Vorrichtung (1) mit einem Getränkebehälterhalter (3) und einem Getränkebehälter (4), wobei der Getränkebehälterhalter (3) eine Haltereinrichtung (9) zur Anordnung des Getränkebehälterhalters (3) an einer Aufnahme (2) aufweist und eine Aufnahmeeinrichtung (15) zur lösbaren Festlegung des Getränkebehälters (4) besitzt und der Getränkebehälter (4) eine Innenausnehmung (5) zur Aufnahme einer Flüssigkeit aufweist und eine form- und flächenkomplementär zur Aufnahmeeinrichtung (15) ausgebildete Anordnungseinrichtung (17) besitzt und an mindestens einer der Aufnahmeeinrichtung (15) und der Anordnungseinrichtung (17) eine Magneteinrichtung (30) zu deren gegenseitiger lösbarer Festlegung vorgesehen ist, **dadurch gekennzeichnet, dass** sich die Anordnungseinrichtung (17) des Getränkebehälters (4) von einer Bodenseite (16) des Getränkebehälters (4) aus in Richtung zur Innenausnehmung (5) erstreckt und mindestens einen der Aufnahmeeinrichtung (15) zugewandten Flächenbereich (45) aufweist, welcher zumindest einem Segment einer Außenfläche eines ellipsoidförmigen Körpers (21, 22) entspricht.

2. Vorrichtung (1) nach Anspruch 1, **dadurch gekennzeichnet, dass** der Flächenbereich (45) einem Segment einer Außenfläche eines elliptischen Paraboloids (22) entspricht.

3. Vorrichtung (1) nach Anspruch 1 oder 2, **dadurch gekennzeichnet, dass** die Anordnungseinrichtung (17) eine Ausnehmung (18) aufweist, welche einer Rotationsfläche entspricht, die durch Rotation des Flächenbereichs um eine Längsmittelachse des Getränkebehälters (4) gebildet ist.

4. Vorrichtung (1) nach einem der vorstehenden Ansprüche, **dadurch gekennzeichnet, dass** die Anordnungseinrichtung (15) an einem von der Bodenseite (16) beabstandeten Endbereich einen mit einer Abflachung versehenen Bereich (29) aufweist.

5. Vorrichtung (1) nach einem der vorstehenden Ansprüche, **dadurch gekennzeichnet, dass** die Anordnungseinrichtung (17) einen Bereich zur Anordnung einer Magneteinrichtung (30) aufweist.

6. Vorrichtung (1) nach einem der vorstehenden Ansprüche, **dadurch gekennzeichnet, dass** die Aufnahmeeinrichtung (15) beabstandet zur Haltereinrichtung (9) angeordnet ist und ein Aufnahmebereich (37) zwischen der Aufnahmeeinrichtung (15) und der Haltereinrichtung (9) ausgebildet ist, welcher zur Aufnahme eines Abschnitts des Getränkebehälters (4) ausgebildet ist.

7. Vorrichtung (1) nach einem der vorstehenden Ansprüche, **dadurch gekennzeichnet, dass** die Aufnahmeeinrichtung (15) einstückig mit der Haltereinrichtung (9) ausgebildet ist und zwischen der Aufnahmeeinrichtung (15) und der Haltereinrichtung (9) ein Verbindungsabschnitt (14) vorgesehen ist.

8. Vorrichtung (1) nach einem der vorstehenden Ansprüche, **dadurch gekennzeichnet, dass** die Aufnahmeeinrichtung (15) mindestens einen form- und flächenkomplementär zum Flächenbereich (45) ausgebildeten ersten Halteabschnitt (32) aufweist, der zur formschlüssigen Aufnahme eines Abschnitts des Flächenbereichs (45) des Getränkebehälters (4) ausgebildet ist.

9. Vorrichtung (1) nach Anspruch 7 oder 8, **dadurch gekennzeichnet, dass** die Aufnahmeeinrichtung (15) einen mit einer Abflachung (34) versehenen Endbereich aufweist, welcher vom Verbindungsabschnitt (14) beabstandet vorgesehen ist.

10. Vorrichtung (1) nach einem der vorstehenden Ansprüche, **dadurch gekennzeichnet, dass** die Aufnahmeeinrichtung (15) einen Bereich zur Anordnung einer Magneteinrichtung aufweist.

11. Vorrichtung (1) nach einem der Ansprüche 8 bis 10, **dadurch gekennzeichnet, dass** die Aufnahmeeinrichtung (15) mindestens einen form- und flächenkomplementär zum Flächenbereich (45) ausgebildeten zweiten Halteabschnitt (33) aufweist, der zur formschlüssigen Aufnahme eines Abschnitts des Flächenbereichs (45) des Getränkebehälters (4) ausgebildet ist und zwischen dem ersten Halteabschnitt (32) und dem zweiten Halteabschnitt (33) der mit der Abflachung (34) versehene Endbereich angeordnet ist.

12. Vorrichtung (1) nach einem der vorstehenden Ansprüche, **dadurch gekennzeichnet, dass** die Aufnahmeeinrichtung (15) und die Anordnungseinrichtung (17) derart konfiguriert sind, dass eine Relativbewegung des Getränkebehälters (4) zum Getränkebehälterhalter (3) den Getränkebehälter (4) mittels eines körperlichen Kontakts der Anordnungseinrichtung (17) an der Aufnahmeeinrichtung (15) selbsttätig an der Aufnahmeeinrichtung (14) zentriert.

13. Vorrichtung (1) nach einem der vorstehenden Ansprüche, **gekennzeichnet durch** eine an der Anordnungseinrichtung (17) und/oder der Aufnahmeeinrichtung (15) angeordnete Anlaufschräge, die derart konfiguriert ist, dass eine Drehung des Getränkebehälters (4) relativ zur Aufnahmeeinrichtung (15) einen lichten Abstand zwischen der Magneteinrichtung (30) und dem Getränkebehälter (4) vergrößert.

14. Vorrichtung nach Anspruch 13, **dadurch gekennzeichnet, dass** die Anlaufschräge in der Form eines an der Aufnahmeeinrichtung (15) angeordneten, im Schnitt dreieckförmigen oder wellenförmigen Profils ausgebildet ist, welches zum formschlüssigen Eingriff mit im Bereich des Bodens des Getränkebehälters (4) ausgebildeten wellenförmigen Profils vorgesehen ist.

15. Vorrichtung (1) nach einem der vorstehenden Ansprüche, **dadurch gekennzeichnet, dass** der Getränkebehälter (4) eine Getränkeflasche oder ein Getränkebecher (46) ist.

## Claims

1. Device (1) having a beverage container holder (3) and a beverage container (4), wherein the beverage container holder (3) has a holder device (9) for arranging the beverage container holder (3) on a receiver (2) and has a receiving device (15) for releasably fixing the beverage container (4), and the beverage container (4) has an inner recess (5) for receiving a liquid and has an arrangement device (17) formed to be complementary to the receiving device (15) in terms of shape and surface, and a magnet device (30) is provided on at least one of the receiving device (15) and the arrangement device (17) for their mutual releasable fixing, **characterised in that** the arrangement device (17) of the beverage container (4) extends out from a base side (16) of the beverage container (4) in the direction of the inner recess (5) and has at least one surface region (45) facing towards the receiving device (15), which surface region corresponds at least to a segment of an outer surface of an ellipsoidal body (21, 22).

2. Device (1) according to claim 1, **characterised in that** the surface region (45) corresponds to a segment of an outer surface of an elliptical paraboloid (22).

3. Device (1) according to claim 1 or 2, **characterised in that** the arrangement device (17) has a recess (18), which corresponds to a rotational surface, which is formed by rotating the surface region around a central longitudinal axis of the beverage container (4).

4. Device (1) according to one of the preceding claims, **characterised in that** the arrangement device (15) has a region (29) provided with a flattening on an end region spaced apart from the base side (16).

5. Device (1) according to one of the preceding claims, **characterised in that** the arrangement device (17) has a region for arranging a magnet device (30).

6. Device (1) according to one of the preceding claims, **characterised in that** the receiving device (15) is arranged spaced apart from the holder device (9), and a receiving region (37) is formed between the receiving device (15) and the holder device (9), which is formed to receive a section of the beverage container (4).

7. Device (1) according to one of the preceding claims, **characterised in that** the receiving device (15) is formed integrally with the holder device (9), and a connecting section (14) is provided between the receiving device (15) and the holder device (9).

8. Device (1) according to one of the preceding claims, **characterised in that** the receiving device (15) has at least one first holding portion (32) formed to be complementary in terms of shape and surface to the surface region (45), said holding portion being formed to receive a section of the surface region (45) of the beverage container (4) in a form-fit manner.

9. Device (1) according to claim 7 or 8, **characterised in that** the receiving device (15) has an end region provided with a flattening (34), said end region being provided spaced apart from the connecting section (14).

10. Device (1) according to one of the preceding claims, **characterised in that** the receiving device (15) has a region for arranging a magnet device.

11. Device (1) according to one of claims 8 to 10, **characterised in that** the receiving device (15) has at least one second holding section (33) formed to be complementary to the surface region (45) in terms of shape and surface, said holding section being formed to receive a section of the surface region (45) of the beverage container (4) in a form-fit manner, and the end region provided with the flattening (34) is arranged between the first holding section (32) and the second holding section (33).

12. Device (1) according to one of the preceding claims, **characterised in that** the receiving device (15) and the arrangement device (17) are configured in such a way that a relative movement of the beverage container (4) to the beverage container holder (3) automatically centres the beverage container (4) on the receiving device (14) by means of body contact of the arrangement device (17) on the receiving device (15).

13. Device (1) according to one of the preceding claims, **characterised by** an inflow incline arranged on the arrangement device (17) and/or the receiving device (15), which inflow incline is configured in such a way that a rotation of the beverage container (4) in relation to the receiving device (15) enlarges a clearance between the magnet device (30) and the beverage container (4).

14. Device according to claim 13, **characterised in that** the inflow incline is formed in the shape of a profile arranged on the receiving device (15) and triangular or undulated in section, said profile being provided for form-fit engagement with undulated profiles formed in the region of the base of the beverage container (4).

15. Device (1) according to one of the preceding claims, **characterised in that** the beverage container (4) is a beverage bottle or a beverage cup (46).

## Revendications

1. Dispositif (1) pourvu d'un support de récipient pour boisson (4) et d'un récipient pour boisson (4), dans lequel le support de récipient pour boisson (3) présente un dispositif support (9) permettant l'agencement du support de récipient pour boisson (3) sur un réceptacle (2) et possède un dispositif de réception (15) permettant la fixation amovible du récipient pour boissons (4) et le récipient pour boissons (4) présente une cavité intérieure (5) pour la réception d'un liquide et possède un dispositif d'agencement (17) conçu de manière complémentaire en forme et en surface au dispositif de réception (15), et un dispositif magnétique (30) sur au moins un parmi le dispositif de réception (15) et le dispositif d'agencement (17) est prévu pour leur fixation amovible simultanée, **caractérisé en ce que** le dispositif d'agencement (17) du récipient pour boissons (4) s'étend à partir d'un côté inférieur (16) du récipient pour boissons (4) en direction de la cavité intérieure (5) et présente au moins une zone de surface (45) orientée vers le dispositif de réception (15), laquelle correspond au moins à un segment d'une surface extérieure d'un corps en forme d'ellipsoïde (21, 22).

2. Dispositif (1) selon la revendication 1, **caractérisé en ce que** la zone de surface (45) correspond à un segment d'une surface extérieur d'un paraboloïde (22) elliptique.

3. Dispositif (1) selon la revendication 1 ou la revendication 2, **caractérisé en ce que** le dispositif d'agencement (17) présente une cavité (18), laquelle correspond à une surface de rotation qui est formée par la rotation d'une zone de surface autour d'un axe central longitudinal du récipient pour boissons (4).

4. Dispositif (1) selon l'une des revendications précédentes, **caractérisé en ce que** le dispositif d'agencement (15) présente une région (29) pourvue d'un méplat sur une zone d'extrémité espacée par rapport au côté inférieur (16).

5. Dispositif (1) selon l'une des revendications précédentes, **caractérisé en ce que** le dispositif d'agencement (17) présente une zone permettant l'agencement d'un dispositif magnétique (30).

6. Dispositif (1) selon l'une des revendications précédentes, **caractérisé en ce que** le dispositif de réception (15) est disposé espacé par rapport au dispositif support (9) et une zone de réception (37) est formée entre le dispositif de réception (15) et le dispositif support (9), laquelle est conçue pour la réception d'un segment du récipient pour boissons (4).

7. Dispositif (1) selon l'une des revendications précédentes, **caractérisé en ce que** le dispositif de réception (15) est conçu en une seule pièce avec le dispositif support (9) et un segment de liaison (14) est prévu entre le dispositif de réception (15) et le dispositif support (9).

8. Dispositif (1) selon l'une des revendications précédentes, **caractérisé en ce que** le dispositif de réception (15) présente au moins un premier segment support (32) complémentaire en forme et en surface à la zone de surface (45), qui est conçu pour la réception par complémentarité des formes d'un segment de la zone de surface (45) du récipient pour boissons (4).

9. Dispositif (1) selon la revendication 7 ou la revendication 8, **caractérisé en ce que** le dispositif de réception (15) présente une zone d'extrémité pourvue d'un méplat (34), laquelle est prévue espacée par rapport au segment de liaison (14).

10. Dispositif (1) selon l'une des revendications précédentes, **caractérisé en ce que** le dispositif de réception (15) présente une zone pour l'agencement d'un dispositif magnétique.

11. Dispositif (1) selon l'une des revendications 8 à 10, **caractérisé en ce que** le dispositif de réception (15) présente au moins un deuxième segment support (33) conçu de manière complémentaire en forme et en surface à la zone de surface (45), qui est conçu pour la réception complémentaire par les formes d'un segment de la zone de surface (45) du récipient pour boissons (4) et est disposé entre le premier segment support (32) et le deuxième segment support (33) de la zone d'extrémité pourvue du méplat (34).

12. Dispositif (1) selon l'une des revendications précédentes, **caractérisé en ce que** le dispositif de réception (15) et le dispositif d'agencement (17) sont conçus de telle manière qu'un déplacement relatif du récipient pour boissons (4) par rapport au support de récipient pour boissons (3) centre automatiquement au niveau du dispositif de réception (14) le récipient pour boissons (4) au moyen d'un contact corporel du dispositif d'agencement (17) sur le dispositif de réception (15).

13. Dispositif (1) selon l'une des revendications précédentes, **caractérisé par** un bord d'attaque disposé sur le dispositif d'agencement (17) et/ou sur le dispositif de réception (15) qui est conçu de telle manière qu'une rotation du récipient pour boissons (4) par rapport au dispositif de réception (15) agrandit un léger intervalle entre le dispositif magnétique (30) et le récipient pour boissons (4).

14. Dispositif selon la revendication 13, **caractérisé en ce que** le bord d'attaque est conçu sous la forme d'un profilé en forme de vagues ou de triangles en coupe disposé sur le dispositif de réception (15), lequel est prévu pour une emprise par complémentarité des formes avec un profilé en forme de vagues conçu dans la zone du fond du récipient pour boissons (4).

15. Dispositif (1) selon l'une des revendications précédentes, **caractérisé en ce que** le récipient pour boissons (4) est une bouteille pour boissons ou un bol pour boissons (46).
